(19) Europäisches Patentamt
European Patent Office
Office européen des brevets

(11) EP 2 797 741 B1

(12) EUROPEAN PATENT SPECIFICATION

(45) Date of publication and mention of the grant of the patent:
29.05.2019 Bulletin 2019/22

(21) Application number: 12818740.8

(22) Date of filing: 21.12.2012

(51) Int Cl.:
*B32B 27/08* (2006.01) *B32B 27/32* (2006.01)

(86) International application number:
PCT/US2012/071140

(87) International publication number:
WO 2013/101699 (04.07.2013 Gazette 2013/27)

# (54) COEXTRUDED MULTILAYER CYCLIC OLEFIN POLYMER FILMS OR SHEET HAVING IMPROVED MOISTURE VAPOR BARRIER

KOEXTRUDIERTE MEHRSCHICHTIGE CYCLOOLEFINPOLYMERFILME ODER -FOLIEN MIT VERBESSERTER WASSERDAMPFUNDURCHLÄSSIGKEIT

FILM OU FEUILLE DE POLYMÈRE D'OLÉFINE CYCLIQUE MULTICOUCHE CO-EXTRUDÉ AYANT UNE BARRIÈRE AMÉLIORÉE À LA VAPEUR D'HUMIDITÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.12.2011 US 201161581381 P**

(43) Date of publication of application:
**05.11.2014 Bulletin 2014/45**

(73) Proprietor: **Dow Global Technologies LLC**
**Midland, MI 48674 (US)**

(72) Inventors:
- **DOOLEY, Joseph**
  **Midland, MI 48642 (US)**
- **JENKINS, Steven, R.**
  **Sanford, MI 48657 (US)**
- **LEE, Patrick, Chang Dong**
  **Midland, MI 48640 (US)**

(74) Representative: **Boult Wade Tennant LLP**
**5th Floor, Salisbury Square House**
**8, Salisbury Square**
**London EC4Y 8AP (GB)**

(56) References cited:
**US-A1- 2009 087 654** **US-A1- 2009 169 853**
**US-A1- 2010 143 709** **US-A1- 2010 215 879**
**US-B2- 6 579 601**

- **WEIJUN ZHOU ET AL: "Birefringent properties of cyclic block copolymers and low-retardation-film development", JOURNAL OF THE SOCIETY FOR INFORMATION DISPLAY, vol. 18, no. 1, 1 January 2010 (2010-01-01), page 66, XP055059052, ISSN: 1071-0922, DOI: 10.1889/JSID18.1.66**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 797 741 B1

**Description**

BACKGROUND

There are many applications for plastic films or sheet where improved moisture barrier would be beneficial. This invention is directed to coextruded multilayer films or sheets (also sometimes referred to as microlayer or nanolayer films) having improved moisture barrier. By coextruding the specified materials and layer structure, films or sheets are provided having good combinations of moisture barrier and other film or sheet properties.

In US 2009/0169853 ("Barrier Films Containing Microlayer Structures") autoclavable films are taught comprising a microlayer structure with heat resistant polymer layer and barrier polymer microlayers having a thickness ranging from 0.01 μm (microns) to 10 μm (microns).

In US 2007/0084083, entitled "Fluid System Having an Expandable Pump Chamber," moisture vapor barrier films are taught comprising less than 10 layers.

In WO 2000076765, entitled "Barrier Material Made of Extruded Microlayers," moisture vapor barrier films are taught.

In the journal article "Confined Crystallization of Polyethylene Oxide in Nanolayer Assemblies", Wang, H., Keum, J.K., Hiltner, A. Baer, E., Freeman, B., Rozanski, A., and Galeski, A., Science, 323, 757 (2009) and patent application US2010/0143709, there are described micro-/nanolayer coextruded films having specified crystal morphology in a semi-crystalline polymer to improve oxygen barrier.

In US2011/0241245, entitled "Axially Oriented Confined Crystallization Multilayer Films," there are described micro-/nanolayer coextruded films having specified crystal morphology in a semi-crystalline polymer to improve oxygen barrier.

In US2010/0143709, entitled "Confined Crystallization Multilayer Films," there are described multilayer films having a first polymer layer coextruded with and confined between second polymer layers, the first polymer layer is said to have high aspect ratio crystalline lamellae, and the multilayer film is said to be substantially impermeable to gas diffusion.

There remains a need for films and sheets with improved barrier properties, particularly moisture barrier, to enable downgauged packaging systems with conventional or improved barrier properties or packaging of conventional or thicker dimension with still further improved barrier properties. A film with standard or downgauged overall thickness, utilizing less volume to achieve a given barrier, can provide improved toughness and other properties via the "freed up" volume being used by polymers providing other attributes than barrier. The films and sheets of the present invention provide such benefits.

SUMMARY

The present invention is directed to a coextruded multilayer film or sheet (including, in an alternative embodiment, profiles, tubes, parisons or the like made or formed therefrom) comprising at least four alternating layers of layer materials A and B, the layers of A and B having an average layer thickness of from 1 to 3000 nm, wherein; (a) layer material A is from 5 to 95 volume percent of the film or sheet based on layer materials A and B and comprises a cyclic olefin polymer ("COP") wherein the cyclic olefin polymer is selected from the group consisting of: (A) cyclic olefin block copolymers ("CBCs") prepared by producing block copolymers of butadiene and styrene that are hydrogenated to a CBC; (B) COP's based on a ring opening metathesis route via norbornene and/or substituted norbornenes; (C) amorphous, transparent copolymers based on cyclic olefins and linear olefins; (D) blends of two or more COPs; or (E) blends of one or more COP with polymers that are not COPs comprising at least 25 wt% cyclic olefin unit content in the total blend or composition; (b) layer material B is from 5 to 95 volume percent of the film or sheet based on layer materials A and B and comprises an ethylene polymer wherein the ethylene polymer has a density of greater than 0.91 grams per cubic centimeter and is selected from the group consisting of high density polyethylene and medium density polyethylene. In other embodiments of the coextruded multilayer film or sheet according to the invention, the individual layer pairs of A and B have a total thickness of at least 40 nm; there are outer skin layers C and optional inner layers D which comprise from 5 to 90 volume percent of the film or sheet; the coextruded multilayer film or sheet has a thickness of from 4.5 μm to 7.5 mm; and/or the coextruded multilayer film or sheet comprises from 10 to 1000 alternating layers of A and B, preferably 30 to 1000 alternating layers of A and B, or 50 to 1000 alternating layers of A and B.

In further alternative embodiments of the coextruded multilayer film or sheet according to the invention: the A and B layers have an average thickness of from 10 to 500 nm.

An alternative aspect of the invention includes any of the multilayer films or sheet described above wherein the film or sheet: has a reduced water vapor transmission rate ("WVTR") as compared to a calculated theoretical WVTR that is calculated from the individual layer WVTRs using the series model for layered assemblies and/or has a WVTR that is 95% or less than the calculated theoretical WVTR. The multilayer film or sheet as described above can also be made in the form of or formed into a profile, tube or parison. In alternative embodiments, the present invention is a profile,

tube or parison comprising at least four alternating layers of layer materials A and B, the layers of A and B having an average layer thickness of from 1 to 3000 nm, wherein; (a) layer material A is from 5 to 95 volume percent of the layer materials A and B and comprises a cyclic olefin polymer selected from the group consisting of:

A. cyclic olefin block copolymers ("CBCs") prepared by producing block copolymers of butadiene and styrene that are hydrogenated to a CBC;
B. COPs based on a ring opening metathesis route via norbornene or substituted norbornene;
C. amorphous, transparent copolymers based on cyclic olefins and linear olefins;
D. blends of two or more COPs; or
E. blends of one or more COP with polymers that are not COPs comprising at least 25 wt% cyclic olefin unit content in the total blend or composition; (b) layer material B is from 5 to 95 volume percent of the layer materials A and B and comprises an ethylene polymer wherein the ethylene polymer has a density of greater than 0.91 grams per cubic centimeter and is selected from the group consisting of high density polyethylene and medium density polyethylene, or in a further alternative embodiment, is a blow molded bottle or other container prepared from such a parison.

BRIEF DESCRIPTION OF THE DRAWING

The accompanying figure together with the following description serves to illustrate and provide a further understanding of the invention and its embodiments and is incorporated in and constitutes a part of this specification. In the drawing:
FIG. 1 is a schematic diagram illustrating a method of making a multilayer film or sheet structure in accordance with an embodiment of the present invention.

DETAILED DESCRIPTION

The term "composition" and like terms mean a mixture of two or more materials, such as a polymer which is blended with other polymers or which contains additives, fillers, or the like. Included in compositions are pre-reaction, reaction and post-reaction mixtures the latter of which will include reaction products and by-products as well as unreacted components of the reaction mixture and decomposition products, if any, formed from the one or more components of the pre-reaction or reaction mixture.
"Blend", "polymer blend" and like terms mean a composition of two or more polymers. Such a blend may or may not be miscible. Such a blend may or may not be phase separated. Such a blend may or may not contain one or more domain configurations, as determined from transmission electron spectroscopy, light scattering, x-ray scattering, and any other method known in the art. Blends are not laminates, but one or more layers of a laminate may contain a blend.
"Polymer" means a compound prepared by polymerizing monomers, whether of the same or a different type, that in polymerized form provide the multiple and/or repeating "units" or "mer units" that make up a polymer. The generic term polymer thus embraces the term homopolymer, usually employed to refer to polymers prepared from only one type of monomer, and the term interpolymer as defined below. It also embraces all forms of interpolymers, e.g., random, block, etc. The terms "ethylene/$\alpha$-olefin polymer" and "propylene/$\alpha$-olefin polymer" are indicative of interpolymers as described below prepared from polymerizing ethylene or propylene respectively and one or more additional, polymerizable $\alpha$-olefin monomer. It is noted that although a polymer is often referred to as being "made of' one or more specified monomers, "based on" a specified monomer or monomer type, "containing" a specified monomer content, or the like, in this context the term "monomer" is obviously understood to be referring to the polymerized remnant of the specified monomer and not to the unpolymerized species. In general, polymers herein are referred to has being based on "units" that are the polymerized form of a corresponding monomer.
"Interpolymer" means a polymer prepared by the polymerization of at least two different monomers. This generic term includes copolymers, usually employed to refer to polymers prepared from two or more different monomers, and includes polymers prepared from more than two different monomers, e.g., terpolymers, tetrapolymers, etc.
"Polyolefin", "polyolefin polymer", "polyolefin resin" and like terms mean a polymer produced from a simple olefin (also called an alkene with the general formula $C_nH_{2n}$) as a monomer. Polyethylene is produced by polymerizing ethylene with or without one or more comonomers, polypropylene by polymerizing propylene with or without one or more comonomers, etc. Thus, polyolefins include interpolymers such as ethylene/$\alpha$-olefin copolymers, propylene/$\alpha$-olefin copolymers, etc.
"(Meth)" indicates that the methyl substituted compound is included in the term. For example, the term "ethylene-glycidyl (meth)acrylate" includes ethylene-glycidyl acrylate (E-GA) and ethylene-glycidyl methacrylate (E-GMA), individually and collectively.
"Melting Point" as used here is typically measured by the DSC technique for measuring the melting peaks of

polyolefins as described in USP 5,783,638. It should be noted that many blends comprising two or more polyolefins will have more than one melting peak; many individual polyolefins will comprise only one melting peak.

"Water vapor permeabilities" are also referred to as water vapor transmission rates (WVTRs) and/or moisture water vapor transmission rates (MVTRs). As used herein, they are determined at 38°C, 100% relative humidity and 1 atm pressure in air and were measured with a MOCON Permatran-W 3/31. The instrument was calibrated with National Institute of Standards and Technology certified 25 μm-thick polyester film of known water vapor transport characteristics. The specimens were prepared and the WVTR was performed according to ASTM F1249.

"Oxygen permeabilities", also referred to herein as oxygen transmission rates (OTR's) are determined at 23°C., 0% relative humidity and 1 atm pressure were measured with a MOCON OX-TRAN 2/20. The instrument was calibrated with National Institute of Standards and Technology certified Mylar film of known $O_2$ transport characteristics. The specimens were prepared and the WVTR was performed according to ASTM D3985.

As used herein, the general term "film", including when referring to a "film layer" in a thicker article, unless expressly having the thickness specified, includes any thin, flat extruded or cast thermoplastic article having a generally consistent and uniform thickness up to 0.254 millimeters (10 mils). "Layers" in films can be very thin, as in the cases of microlayers discussed in more detail below.

As used herein, the general term "sheet", unless expressly having the thickness specified, includes any thin, flat extruded or cast thermoplastic article having a generally consistent and uniform thickness greater than "film", generally at least 0.254 millimeters thick and up to 7.5 mm (295 mils) thick. In some cases sheet is considered to have a thickness of up to 6.35 mm (250 mils).

Either film or sheet, as those terms are used herein can be in the form of shapes, such as profiles, parisons, tubes, and the like, that are not necessarily "flat" in the sense of planar but utilize A and B layers according to the present invention and have a relatively thin cross section within the film or sheet thicknesses according to the present invention.

The numerical figures and ranges here are approximate, and thus may include values outside of the range unless otherwise indicated. Numerical ranges (e.g., as "X to Y", or "X or more" or "Y or less") include all values from and including the lower and the upper values, in increments of one unit, provided that there is a separation of at least two units between any lower value and any higher value. As an example, if a compositional, physical or other property, such as, for example, temperature, is from 100 to 1,000, then all individual values, such as 100, 101, 102, etc., and sub ranges, such as 100 to 144, 155 to 170, 197 to 200, etc., are expressly enumerated. For ranges containing values which are less than one or containing fractional numbers greater than one (e.g., 1.1, 1.5, etc.), one unit is considered to be 0.0001, 0.001, 0.01 or 0.1, as appropriate. For ranges containing single digit numbers less than ten (e.g., 1 to 5), one unit is typically considered to be 0.1. These are only examples of what is specifically intended, and all possible combinations of numerical values between the lowest value and the highest value enumerated, are to be considered to be expressly stated in this disclosure.

According to the present invention it has been found that the pairing of thin A and B layers, as described in more detail below, surprisingly exhibit moisture (water) vapor transmission rates that are lower and more improved than would otherwise be expected.

In general, a broad range of thermoplastic ethylene polymers (also often generally referred to as resins, plastics or plastic resins) can be employed in the ethylene polymer layer in the laminate film or sheet structures provided they can be formed into thin film or sheet layers and provide the desired physical properties. Alternative or preferred embodiments of the invention may employ one or more of the specific types of thermoplastic polyolefin copolymers and/or specific thermoplastic polyolefin copolymers in specific layers, as will be discussed further below. These ethylene polymers can include ethylene homopolymers and copolymers of at least 50 weight percent ethylene with one or more other C-3 to C-25 alpha olefin comonomers including, for example, propylene, butene, hexene and octene and including copolymers of ethylene, optionally one or more of these C-3 to C-25 alpha olefin comonomers and one or more olefinic additionally copolymerizable monomers polymerized therewith. Such additional olefinic copolymerizable monomers include, for example, olefin monomers having from 5 to 25 carbon atoms and ethylenically unsaturated carboxylic acids (both mono- and difunctional) as well as derivatives of these acids, such as esters and anhydrides. The suitable ethylene preferably at least 70 percent by weight, more preferably at least 80 percent by weight, more preferably at least 85 percent by weight, more preferably at least 90 weight percent and most preferably at least 95 percent by weight ethylene.

Preferred ethylene polymer layer materials are homopolymers of ethylene and copolymers with less than 50 weight percent butene, hexene or octene, preferably 30 or less weight percent, more preferably 20 or less weight percent, more preferably 10 or less weight percent, and most preferably 5 or less weight percent. Ethylene polymers such as ethylene backbone homo- and co-polymers are known including high pressure, free-radical low density polyethylene (LDPE), linear low density polyethylenes (LLDPE), ethylene-based olefin block copolymers ("e-OBCs"), ethylene-based Ziegler-Natta catalyzed polymers including heterogeneous linear low density polyethylene, ultra low density polyethylene (ULDPE), very low density polyethylene (VLDPE), medium density polyethylene ("MDPE"), and high density polyethylene ("HDPE").

Suitable methods for the preparation of all of these types of polymers are well known in the art. As known to

those skilled in this area of technology, there are different methods for calculating or determining the comonomer content of ethylene copolymers that have different levels of accuracy. As used herein, unless otherwise specified, the ethylene copolymer comonomer contents are measured according to carbon 13 NMR. Other methods that can be used for general comonomer levels include the ASTM FTIR method based on IR (infrared) or mass balance method.

The density range for the ethylene polymer is at least about 0.91, preferably at least about 0.92, and more preferably at least about 0.940 grams per cubic centimeter (g/cc) as determined by ASTM Test Method D 1505 and less than or equal to about 0.98 g/cc.

Preferably the ethylene polymer has a melt index of at least about 0.01 grams per 10 minutes (g/10 min) and less than or equal to 35 g/10 min.

High density polyethylene (HDPE) is a preferred ethylene polymer and, as well known, is generally produced by a low pressure, coordination catalyst ethylene polymerization process and consists mainly of long linear polyethylene chains. The density of this type of polymer is at least about 0.940 grams per cubic centimeter (g/cc) as determined by ASTM D 792 and less than or equal to about 0.98 g/cc, with a melt index of at least 0.01 grams per 10 minutes (g/10 min) and less than or equal to 35 g/10 min. These and other ethylene polymer melt indexes referred to herein can generally be determined by ASTM Test Method D 1238, Condition 190°C/2.16 kg, (also referred to as $I_2$). HDPE resins preferred for use in the blends according to the present invention will have a density of at least 0.950 grams per cubic centimeter (g/cc) and up to and including 0.975 g/cc as determined by ASTM D 792, method A, on samples prepared according to ASTM D 1928 (annealed), Method C. ASTM D792 gives the same result as ISO 1183. Suitable HDPE resins will have a melt index of at least 0.1 and more preferably at least 1 g/10 min and less than or equal to 25 grams per 10 minutes; more preferably less than or equal to 10 g/10 min. Suitable HDPEs are commercially available as ELITE 5960G, HDPE KT 10000 UE, HDPE KS 10100 UE and HDPE 35057E brand resins from The Dow Chemical Company. Medium density polyethylene (MDPE) is also a preferred ethylene copolymer and, as well known, is generally produced by known ethylene polymerization process techniques (e.g., low pressure). The density of this type of polymer is at least 0.925 grams per cubic centimeter (g/cc) as determined by ASTM Test Method D 728 and less than or equal to 0.945 g/cc, with a melt index of at least 0.01 grams per 10 minutes (g/10 min) and less than or equal to 35 g/10 min. For example, suitable MDPEs are commercially available as ELITE 5940G brand resins from The Dow Chemical Company or Chevron Philips Chemical Company MarFlex HHM TR 130.

Blends of any of the above thermoplastic ethylene polymer resins can also be used in this invention and, in particular, the thermoplastic polyolefin copolymers can be blended or diluted with one or more other polymers to the extent that the polymers are (i) miscible with one another, (ii) the other polymers have little, if any, impact on the desirable properties of the ethylene polymer, e.g., optics and low modulus, and (iii) the thermoplastic ethylene polymer of this invention constitute at least 70, preferably at least 75 and more preferably at least 80 weight percent of the blend. Preferably, the blend itself also possesses the density, melt index and melting point properties noted above.

The cyclic olefin polymers ("COPs") suitable for use in the films or sheet according to the present invention are generally known olefin polymers that comprise a saturated hydrocarbon ring. Suitable COPs comprise at least 25 wt% cyclic units, which weight percentage is calculated based on the weight percentage of the olefin monomer units containing, including functionalized to contain, the cyclic moiety ("MCCM") that is polymerized into the COP as a percentage of the total weight of monomers polymerized to form the final COP. Preferably the COPs comprise at least 40 wt%, more preferably at least 50 wt% and more preferably at least 75 wt% MCCM. The cyclic moiety can be incorporated in the backbone of the polymer chain (such as from a norbornene ring-opening type of polymerization) and/or pendant from the polymer backbone (such as by polymerizing styrene (which is eventually hydrogenated to a cyclic olefin) or other vinyl-containing cyclic monomer). COPs can be homopolymers based on a single type of cyclic unit; copolymers comprising more than one cyclic unit type; or copolymers comprising one or more cyclic unit type and other incorporated monomer units that are not cyclic, such as units provided by or based on ethylene monomer. Within copolymers, the cyclic units and other units can be distributed in any way including randomly, alternately, in blocks or some combination of these. The cyclic moiety in the COP need not result from polymerization of a monomer comprising the cyclic moiety per se but may result from cyclicly functionalizing a polymer or other reaction to provide the cyclic moiety units or to form the cyclic moiety from a cyclic moiety precursor. As an example, styrene (which is a cyclic moiety precursor but not a cyclic unit for purposes of this invention) can be polymerized to a styrene polymer (not a cyclic olefin polymer) and then later be completely or partially hydrogenated to result in a COP.

The MCCMs which can be used in polymerization processes to provide cyclic units in COP's include but are not limited to norbornene and substituted norbornenes. As mentioned above, cyclic hexane ring units can be provided by hydrogenating the styrene aromatic rings of styrene polymers. The cyclic units can be a mono- or multi-cyclic moiety that is either pendant to or incorporated in the olefin polymer backbone. Such cyclic moieties/structures include cyclobutane, cyclohexane or cyclopentane, and combinations of two or more of these. For example, cyclic olefin polymers containing cyclohexane or cyclopentane moieties are $\alpha$-olefin polymers of 3-cyclohexyl-1-propene (allyl cyclohexane) and vinyl cyclohexane.

COPs include cyclic olefin block copolymers ("CBCs") prepared by producing block copolymers of butadiene

and styrene that are then hydrogenated, preferably fully hydrogenated, to a CBC. Preferred CBCs are fully hydrogenated di-block (SB), triblock (SBS) and pentablock (SBSBS) polymers. In such tri- and penta-block copolymers each block of a type of unit is the same length; i.e., each S block is the same length and each B block is the same length. Total molecular weight (Mn) prior to hydrogenation is from 25,000 to 1,000,000 g/mol. The percent of styrene incorporated is from 10 to 99 wt%, preferably from 50 to 95 wt% and more preferably from 80 to 90 wt%, the balance being butadiene. For example, WO2000/056783(A1) discloses the preparation of such pentablock types of COBs.

Other COPs are described in Yamazaki, Journal of Molecular Catalysis A: Chemical, 213 (2004) 81-87; and Shin et al., Pure Appl. Chem., Vol. 77, No. 5, (2005) 801-814. In the publication from Yamazaki (of Zeon Chemical) the polymerization of a COP is described as based on a ring opening metathesis route via norbornene. Commercially available COP products from Zeon Chemical are described as an amorphous polyolefin with a bulky ring structure in the main chain, based on dicyclopentadiene as the main monomer and saturating the double bond in norbornene ring-opening metathesis with a substituent (R) by hydrogenation. Zeonex 690R is a commercially available COP sold by Zeon Chemical.

Another example of COPs are the Topas brand cyclic olefin copolymers commercially available from Topas Advanced Polymers GmbH which are amorphous, transparent copolymers based on cyclic olefins (i.e., norbornene) and linear olefins (e.g., ethylene), with heat properties being increased with higher cyclic olefin content. Preferably such COP s are represented by the following formula with the x and y values selected to provide suitable thermoplastic polymers:

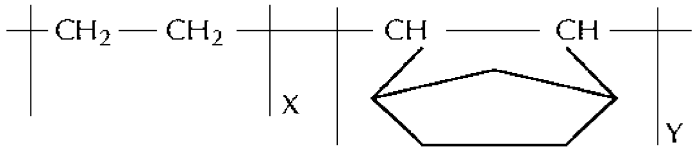

The layers comprising the COPs can be made from COPs or can comprise physical blends of two or more COPs and also physical blends of one or more COP with polymers that are not COPs provided that any COP blends or compositions comprise at least 25 wt% cyclic olefin unit content in the total blend or composition.

Optional layers may be included in the films or sheet according to the present invention, either as internal layers or microlayers with the ethylene and cyclic olefin polymer layers or externally as coating or skin layers. Such internal layers may be single, repeating, or regularly repeating layer(s). Such optional layers can include the known layer materials that have (or provide) sufficient adhesion and provide desired properties to the films or sheet, such as tie layers, barrier layers, skin layers, etc. Examples of specific polymers that can be used as skin layers are polypropylenes, polyethylene oxide, polycaprolactone, polyamides, polyesters, polyvinylidene fluoride, polystyrene, polycarbonate, polymethylmethacrylate, polyamides, ethylene-co-acrylic acid copolymers, polyoxymethylene and blends of two or more of these; and blends with other polymers comprising one or more of these. Preferred polymers that may be used as the skin layer include polyethylene, polyethylene copolymers, polypropylene, polypropylene copolymers, polyamide, polystyrene, polycarbonate and polyethylene-co-acrylic acid copolymers.

Examples of specific polymers that can be employed as tie or adhesive layers include: polar ethylene copolymers such as copolymers with vinyl acetate, acrylic acid, methyl acrylate, and ethyl acrylate; ionomers; maleic anhydride-grafted ethylene polymers and copolymers; blends of two or more of these; and blends with other polymers comprising one or more of these.

Examples of specific polymers that can be employed as barrier layers include: polyethylene terephthalate, ethylene vinyl alcohol, polyvinylidene chloride copolymers, polyamides, polyketones, MXD6 nylon, blends of two or more of these; and blends with other polymers comprising one or more of these.

Techniques for making the multilayer films or sheet according to the invention are known in the art. These films or sheet comprise alternating layers of at least the ethylene polymer ("A") and the cyclic olefin polymers ("B") which is often represented as a repeating ABABA... or BABAB... structure. It should also be understood that the multilayer structure of the invention may include additional types of layers. For example, these other layers can include tie layers, adhesive layers, barrier layers and/or other polymer layers for a structure repeating as: ABCABC...; ABCDABCD... and the like.

The multilayer polymer film or sheet having at least 4 alternating thin layers (at least two layer pairs of each of A and B) can be prepared by coextrusion of a microlayer structure (also sometimes referred to as "nanolayer" structure) of at least two polymer materials. The films or sheets are comprised of alternating layers of two or more components with individual layer thickness ranging from the micrometer ("μm") scale down in thickness to the nanometer ("nm") or "nano" scale, as will be discussed further below. A typical multilayer coextrusion apparatus is generally illustrated in Figure 1. The feedblock for a multi-component multilayer system usually combines the polymeric components into a

layered structure of the different component materials. As known to practitioners in this field, the starting layer thicknesses (their relative volume percentages) are used to provide the desired relative thicknesses of the A and B layers in the final film.

For a two component structure polymeric material "A" and polymeric material "B" are initially coextruded into a starting "AB" or "ABA" layered feedstream configuration where "A" represents a layer and "B" represents a layer. Then, known layer multiplier techniques can be applied to multiply and thin the layers resulting from the feedstream. Layer multiplication is usually performed by dividing the initial feed stream into 2 or more channels and "stacking" of the channels. As known to practitioners in this field, the general formula for calculation of the total numbers of layers in a multilayer structure using a feedblock and repeated, identical layer multipliers is: $N_t=(N_I)(F)^n$ where: $N_t$ is the total number of layers in the final structure; $N_I$ is the initial number of layers produced by the feedblock, usually 2 or 3; F is the number of layer multiplications in a single layer multiplier, usually the "stacking" of 2 or more channels; and n is number of identical layer multiplications that are employed.

For multilayer structures of two component materials A and B, a three layer ABA initial structure is frequently employed to result in a final film or sheet where the outside layers are the same on both sides of the film or sheet after the layer multiplication step(s). Where the A and B layers in the final film or sheet are intended to be generally equal thickness and equal volume percentages, the two A layers in the starting ABA layer structure are half the thickness of the B layer but, when combined together in layer multiplication, provide the same layer thickness (excepting the two, thinner outside layers) and comprise half of the volume percentage-wise. As can be seen, since the layer multiplication process divides and stacks the starting structure multiple times, two outside A layers are always combined each time the feedstream is "stacked" and then add up to equal the B layer thickness. In general, the starting A and B layer thicknesses (relative volume percentages) are used to provide the desired relative thicknesses of the A and B layers in the final film. Since the combination of two adjacent, like layers appears to produce only a single discrete layer for layer counting purposes, practitioners in this field use the general formula $N_t=(2)^{(n+1)}+1$ for calculation of the total numbers of "discrete" layers in a multilayer structure using an "ABA" feedblock and repeated, identical layer multipliers where $N_t$ is the total number of layers in the final structure; 3 initial layers are produced by the feedblock; a layer multiplication is division into and stacking of 2 channels; and n is number of identical layer multiplications that are employed.

A suitable two component coextrusion system (e.g., repetitions of "AB" or "ABA") has two 1.91 cm (¾ inch) single screw extruders connected by a melt pump to a coextrusion feedblock. The melt pumps control the two melt streams that are combined in the feedblock as two or three parallel layers in a multilayer feedstream. Adjusting the melt pump speed varies the relative layer volumes (thicknesses) and thus the thickness ratio of layer A to layer B. From the feedblock, the feedstream melt goes through a series of multiplying elements. It is understood by those skilled in the art that the number of extruders used to pump melt streams to the feedblock in the fabrication of the structures of the invention generally equals the number of different components. Thus, a three-component repeating segment in the multilayer structure (ABC...), requires three extruders.

Examples of known feedblock processes and technology are illustrated in WO 2008/008875; US Patent 3,565,985; US Patent 3,557,265; and US Patent 3,884,606. Layer multiplication process steps are generally known in the art and shown, for example in US Patentss 5,094,788 and 5,094,793 teaching the formation of a multilayer flow stream by dividing a multilayer flow stream containing the thermoplastic resinous materials into first, second and optionally other substreams and combining the multiple substreams in a stacking fashion and compressing, thereby forming a multilayer flow stream. As may be needed depending upon materials being employed for film or sheet production and the film or sheet structures desired , films or sheet comprising 2 or more layers of the multilayer flow stream can be provided by encapsulation techniques such as shown by US Patent 4,842,791 encapsulating with one or more generally circular or rectangular encapsulating layers stacked around a core; as shown by of US Patent 6,685,872 with a generally circular, nonuniform encapsulating layer; and/or as shown by WO 2010/096608A2 where encapsulated multilayered films or sheet are produced in an annular die process.

It has been found that the improved moisture barrier requires at least 2 layer pairs and the multilayer films or sheets of the present invention generally have at least 4 discrete layers (e.g., two repeat units comprising an ethylene polymer layer and a cyclic olefin polymer layer). The individual layers of A and B may each have a thickness of 20 nm or more, so that a pair AB may have a thickness of 40 nm or more, and a film of 4 discrete layers (ABAB) may have a thickness of 80 nm or more. Preferably films or sheets according to the present invention have at least 10 discrete layers, more preferably they have at least 15 discrete layers, more preferably they have at least 20 discrete layers, more preferably they have at least 30 discrete layers, more preferably they have at least 50 discrete layers, more preferably they have at least 100 discrete layers, and more preferably they have at least 200 discrete layers. Depending upon the type and number of layer multipliers employed,the films or sheets according to the present invention can have very large numbers of layers, easily up to 10,000 layers However, for their more common uses, including their use as a layer in a thicker structure, and using typical production process equipment, it has been found that for obtaining the desired discrete material layers and interfaces, there can be up to 5000 discrete layers; generally less than 3,000 discrete layers, and there is preferably less than 1,000 discrete layers, more preferably less than 800 discrete layers; more preferably less

than 600 discrete layers; and more preferably less than 500 discrete layers. In one example, the multilayer film of the present invention has 257 discrete layers. Preferred embodiments of this invention include the specific ranges of layer numbers combining any of the lower layer numbers disclosed above with any of the upper layer numbers, such as for example, the preferred embodiments comprising specific combinations of from 10 to 5000 layers; from 15 to 1000 layers; and from 20 to 500 layers.

As noted above, the individual layers A and B of the microlayered film may have average thicknesses of 1 nm or more. The individual layers A and B may have average thicknesses of 10 nm or more, 20 nm or more, 30 nm or more, or 50 nm or more, or 100 nm or more, or 200 nm or more, or 250 nm or more, or 300 nm or more. The individual layers A and B may have average thicknesses of 3000 nm or less, 2000 nm or less, 1000 nm or less, 800 nm or less, 500 nm or less, 450 nm or less, 300 nm or less, 250 nm or less, 200 nm or less, 100 nm or less, or 80 nm or less. In a given bilayer AB or film or sheet $(AB)_n$, the layers A and B may have the same or substantially the same thickness, or they may have different and independently selected or established thicknesses. Films or sheets where the layers have an average thickness of 250 to 450 nm, or 275 to 325 nm, have desirably increased oxygen and water vapor transmission rates (i.e., good barrier properties). Having the ethylene polymer layer B at an average thickness of 250 to 450 nm is desirable, particularly (but not exclusively) when the ethylene polymer is HDPE.

Within a film or sheet $(AB)_n$, the average thickness of the A layers and the average thickness of the B layers are not necessarily the same or substantially the same throughout the film or sheet. Preferably, the layers A and B in a given film or sheet $(AB)_n$ are substantially the same average thickness as each other. Independent of the relative thickness of layers A and B, preferably, the thickness of the layers A and the layers B in a given film or sheet $(AB)_n$ are substantially the same (A to A; and B to B) throughout the film or sheet.

In general, the overall thickness of the multilayered films or sheets according to the present invention is dependent on the needed performance of the film or sheet and particularly whether it is used in combination with skin layers and/or as layer contribution or a component of a thicker structure such as a profile or parison. In general, excluding other non-microlayer layers, skins and the like that may be included in a final structure or article, the films or sheet have a thickness of at least 80 nm and up, for example, 100 nm and up, to 7.5 mm (295 mils) in thickness. Preferably to provide sufficient and desired levels of physical properties and barrier performance and without including any skin layers that are typically employed, the films or sheet according to the invention have a thickness of at least 150 nm, preferably of at least 225 nm, preferably at least 400 nm, more preferably at least 800 nm, more preferably at least 1 micrometer ("μm") (0.04 mil), more preferably at least 10 μm (0.39 mil), and more preferably at least 100 μm (3.94 mils).

For use as films or sheets for various known film or sheet applications or as layers in thicker structures and to maintain light weight and low costs, the overall thickness of the multilayered films or sheets according to the present invention (not including any skin or non-micro-layers) is preferably less than or equal to 1 mm (39.4 mil), preferably less than 0.5 mm (19.7 mils), more preferably less than or equal to 100 μm (3.94 mil), and more preferably less than or equal to 10 μm (0.394 mil).

Depending upon roles the A and B layers are intended to play in the films or sheets and for optimizing the performances of the microlayer pairs, the layer thicknesses can be adjusted by the relative flow rates for each material, the number of layer multiplications and/or the final film or sheet thickness. As needed or desired, the individual layer thickness of A and B layers can be controlled and separately adjusted relative to each other by altering the relative flow rates and relative volume percentages in the initial extrudate prior to layer multiplication. The thicknesses of the layers in the final films or sheet, once their relative volume percentages in the microlayer structure have been established, can be controlled by the number of layers (number of multiplications) and/or the final film or sheet thickness. The more layer multiplications for a given film or sheet thickness yields thinner layers, as does drawing down the overall film or sheet thickness for any given number of layers. For the thin layer thicknesses in the film or sheet according to the present invention, the thickness is most readily determined by measuring the final film thickness and calculating the layer thickness from the known number of layers and the relative volume (thickness) percentages of the polymer materials in the layers, including any skin or outer layers. Photomicrographs of the film cross sections can also be viewed by known techniques to determine or confirm the layer thicknesses.

For obtaining desired balances of moisture barrier and other properties, the average thickness of individual microlayers in the multilayered films or sheet according to the present invention is generally from 1 nm to 3000 nm (0.118 mils). Preferably to provide sufficient and desired layer continuity and levels of moisture vapor barrier and toughness properties, physical properties and performance, the average thickness is at least 2 nm, preferably at least 5 nm, preferably at least 10 nm, more preferably at least 20 nm, and most preferably at least 25 nm. To maintain good barrier levels, light weight and low costs and depending somewhat upon optimizing the performances of the microlayer pairs, the average thickness of individual microlayers in the multilayered films or sheet according to the present invention is preferably less than or equal to 2000 nm (0.079 mils), preferably less than or equal to 1500 nm (0.059 mils), preferably less than or equal to 800 nm (0.0315 mils), preferably less than or equal to 700 nm, preferably less than or equal to 500 nm, preferably less than or equal to 400 nm, and more preferably less than or equal to 50 nm. Preferred embodiments of this invention include the specific layer thickness ranges combining any of the lower layer thicknesses disclosed above

with any of the upper layer thicknesses, such as, for example, the preferred embodiments comprising specific layer thicknesses of from 10 to 1500 nm, preferably from 15 to 1000 nm, and more preferably from 20 to 500 nm.

As may be needed to obtain desired combinations of film performance, properties, and/or cost, the A and B layers can have differing proportions (percentage by volume) in the film or sheet structures according to the invention. For example, the more expensive cyclic olefin polymer A layer can be from 10 to 90 volume percent in the film or sheet structures according to the invention, but is preferably less than 60 volume % more preferably less than 55 volume %, more preferably less than 50 volume %, more preferably less than 45 volume % and more preferably less than 40 volume %. Conversely, the ethylene polymer layer B can be from 90 to 10 volume percent in the film or sheet structures according to the invention, but is preferably at least 40 volume %, preferably at least 45 volume %, more preferably at least 50 volume %, more preferably at least 55 volume %, and more preferably at least 60 volume %.

As noted above, the multilayer film or sheet structures according to the present invention can advantageously be employed or provided as layers in thicker structures having skin layers or other inner layers that that provide structure or other properties in the final article. For example, in one aspect of the present invention, skin or surface layers having additional desirable property such as toughness, printability and the like are advantageously employed on either side of the films or sheet according the invention to provide films or sheet suitable for packaging and many other applications where their combinations of moisture barrier, physical properties and low cost will be well suited. In another aspect of the present invention, tie layers can be used with the multilayer film or sheet structures according to the present invention.

When employed in this way in a laminate structure or article with outer surface or skin layers and optional other inner layers, the microlayer film or sheet according the present invention can be used to provide at least 5 volume % of a desirable film or sheet, including in the form of a profile, tube, parison or other laminate article, the balance of which is made up by up to 95 volume % of additional outer surface or skin layers and/or inner layers. In preferred laminate structure or article embodiments, the microlayer film or sheet according the present invention provides at least 10 volume %, preferably at least 15 volume %, preferably at least 20 volume %, more preferably at least 25 volume %, and more preferably at least 30 volume % of the laminate article. In other preferred laminate structure or article embodiments, the microlayer film or sheet according the present invention provides up to 100 volume %, preferably less than 80 volume %, preferably less than 70 volume %, more preferably less than 60 volume %, and more preferably less than 50 volume %.

Further, the multilayer films or sheet according the present invention, especially when in a laminate structure or article embodiment, may be made in the form of or formed into a number of articles by, for example, forming dies, profile dies, thermoforming, vacuum forming, or pressure forming. Further, for example, through the use of forming dies, the multilayer films or sheet may be made in the form of or formed into a variety of useful shapes including profiles, tubes and the like. Parisons comprising the multilayer film or sheet structures can be employed in known blow molding processes to provide various types of bottles or other containers also according the present invention.

The following experiments are for the purpose of illustration only and are not intended to limit the scope of the claims, which are appended hereto.

## Experiments

In the present experiments, experimental films according to the present invention (unless noted to be "controls") are prepared from ethylene polymer layers (i.e., high density polyethylene ("HDPE") or polypropylene ("PP")) coextruded with cyclic olefin polymer layers (i.e., cyclic olefin copolymer ("COC") or cyclic block copolymers ("CBC1" or "CBC2")).

One layer control films are extruded from each of the HDPE, PP, COC, and CBC resins and tested as described below for their control Oxygen Transmission Rate (OTR) values and control film Water Vapor Transmission Rate (WVTR) values.

Table 1 summarizes the COP materials giving their trade names, density, cyclic unit, weight percentage of the cyclic units, control film. The COP material Zeonex 690R brand COC resin is commercially available from Zeon Chemical and the COP materials HP030 and HP040 brand CBC resins were commercially available from The Dow Chemical Company; comparable materials can be obtained from Taiwan Synthetic Rubber Corporation.

Table 1 - COPs

| COP | Trade Name | Density (g/cc) | MFR (g/10 min) @ 280°C/ 2.16 kg | Cyclic Olefin Unit | Wt % Cyclic Olefin Unit | OTR (cc-mm/$m^2$.day. atm) ((cc-mil/ 100$in^2$.day.atm)) | WVTR (g mm/$m^2$.day) ((g-mil/ 100$in^2$.day)) |
|---|---|---|---|---|---|---|---|
| Cyclic Olefin Copolymer (COC) | Zeonex 690R | 1.01 | 20 | Backbone Cyclopentane | >25% | 33.5 (85) | 0.17 (0.44) |

(continued)

| COP | Trade Name | Density (g/cc) | MFR (g/10 min) @ 280°C/ 2.16 kg | Cyclic Olefin Unit | Wt % Cyclic Olefin Unit | OTR (cc-mm/$m^2$.day. atm) ((cc-mil/ 100$in^2$.day.atm)) | WVTR (g mm/$m^2$.day) ((g-mil/ 100$in^2$.day)) |
|---|---|---|---|---|---|---|---|
| Cyclic Block Copolymer 1 (CBC1) | HP030 | 0.941 | 39 | Pentablock Hydrogenated Styrene | >40% | 146.6 (372) | 0.43 (1.1) |
| Cyclic Block Copolymer 2 (CBC2) | HP040 | 0.931 | 15 | Pentablock Hydrogenated Styrene | >40% | 171.0 (434) | 0.56 (1.43) |

Table 2 summarizes the ethylene polymer material designations, Trade names, and control film Oxygen Transmission Rate (OTR) values and control film Water Vapor Transmission Rate (WVTR) values.

Table 2 - Ethylene Polymers

| | Trade Name | MFR (g/10 min) @ 190°C/2.16 kg | Density (g/cc) | OTR (cc-mm/$m^2$.day.atm) ((cc-mil/100$in^2$.day.atm)) | WVTR (g mm/$m^2$.day) ((g-mil/100$in^2$.day)) |
|---|---|---|---|---|---|
| HDPE1 | ELITE5960G | 0.85 | 0.96 | 34.2 (86.8) | 0.11 (0.27) |
| HDPE2 | NA | NA | 0.963 | 21.8 (55.4) | 0.08 (0.20) |
| HDPE3 | NA | NA | 0.97 | 15.4 (39.1) | 0.05 (0.13) |
| PP | H349-02 | 2 (230°C/2.16 kg) | 0.90 | 69.1 (175.4) | 0.27 (0.68) |

ELITE 5960G brand HDPE resin and H349-02 brand PP resin are commercially available from The Dow Chemical Company.

Experimental films are prepared having 257 thin layers of alternating ethylene polymer (EP) and cyclic olefin polymer (COP) where the resulting final layer thicknesses provided by the final thicknesses to which the films are drawn down to. The nominal film thickness ("Nom. Film Thickness"), nominal COP layer thickness, nominal ethylene polymer thickness ("Nom. Et. Pol. Thickness") and total skin layer volume percentage (includes both skin layers) are given the Tables below. The microlayer film compositions (including outer layer(s)) based on volume percentages of the two types of layers (EP layer vol % to COP layer vol %) were:

Series 1 (HDPE1/COC) - 67/33 (about 67 % (ABAB)n and A=B in volume %; about 33% HDPE1 outer layers)

Series 2 (HDPE1/CBC1) - 83/17 (about 67 % (ABAB)n and A=3B in volume %; about 33% HDPE1 outer layers)

Series 3 (HDPE1/CBC2) - 83/17 (about 67 % (ABAB)n and A=3B in volume %; about 33% HDPE1 outer layers)

Series 6 (PP/COC) - 83/17 (about 67 % (ABAB)n and A=3B in volume %; about 33% HDPE1 outer layers)

Series 7 (PP/CBC) - 83/17 (about 67 % (ABAB)n and A=3B in volume %; about 33% HDPE1 outer layers)

Series 8 (PP/CBC) - 83/17 (about 67 % (ABAB)n and A=3B in volume %; about 33% HDPE1 outer layers)

Series 9 (HDPE2/COC) - 83/17 (about 67 % (ABAB)n and A=3B in volume %; about 33% HDPE1 outer layers)

Series 10 (HDPE3/COC) -83/17 (about 67 % (ABAB)n and A=3B in volume %; about 33% HDPE1 outer layers)

Series 11 (HDPE2/CBC1) - 83/17 (about 67 % (ABAB)n and A=3B in volume %; about 33% HDPE1 outer layers)

Series 12 (HDPE3/CBC1) -83/17 (about 67 % (ABAB)n and A=3B in volume %; about 33% HDPE1 outer layers)

The 257 layer experimental multilayer films with alternating B layers of ethylene polymer (HDPE) or PP and A layers of cyclic olefin polymer (COC, CBC1 or CBC2) (ethylene polymer as outer layers) were made by a cast film process as generally summarized in Figure 1 and including the feedblock process as generally shown in US Patent 3,557,265 and a layer multiplication step as generally shown in US Patent 5,094,793.

Generally according to the schematic drawing of a layer-multiplying coextrusion in FIG. 1, A and B polymers are extruded by two 1.9 cm (¾ inch) single screw extruders connected by a melt pump to a coextrusion feedblock with an BAB feedblock configuration (as described above). The melt pumps control the two melt streams that are combined in the feedblock; by adjusting the melt pump speed, the relative layer thickness, that is, the ratio of A to B can be varied. The feedblock provides a feedstream to the layer multipliers as 3 parallel layers in a BAB configuration with B split into equal thicknesses of B layer on either side of A layer in the total A:B volume ratios shown in the tables. Then, seven layer multiplications are employed, each dividing the stream into 2 channels and stacking them to provide a final film having 257 alternating discrete microlayers. Skin layers of polyethylene that are about 33 volume percent of the final film are provided to each surface (16.5 vol % to each side of the film) by additional extruders.

The extruders, multipliers and die temperatures are set to 240°C for all the streams and layers of the multilayer products to ensure matching viscosities of the two polymer melts. The multilayer extrudate is extruded from a flat 35.5 cm (14 inch) die having a die gap of 508 μm (20 mils) to a chill roll having a temperature of 80°C with almost no air gap between the die and chill roll and providing a relatively fast cooling of the film. The overall flow rate is about 1.36 kg/hr (3 lbs/hr). The multilayer films are coextruded as films of various nominal thicknesses (25.4 to 203.2 μm ((1 to 8 mils)) by varying the chill roll speed as needed to obtain the desired draw down. For example, increasing the chill roll speed reduces the total film thickness and correspondingly the individual layer thicknesses. Thus, varying the relative volume percentages of the A and B layers as shown above and adding 33 volume percent as external skin layers from the additional skin layer extruder, produces the varying COP nominal layer thicknesses in the so-called microlayer films from 33 to 530 nm as shown in the Tables. The nominal COP layer thicknesses are calculated from the number of layers, the composition ratio, the skin volume percentage and the overall film thickness. As can be seen, the oxygen and water vapor transmission rates are measured and varied as the COC or CBC layer thicknesses were varied.

As also indicated in the result summary Table 3 below, two experimental 5 layer control films are prepared (4 and 5) as control films with alternating ethylene polymer (EP) and cyclic olefin polymer (COP) layers as shown below and having relatively thicker (8382 nm) COP layers.

Experimental Films 4 and 5 are prepared according to the film process above except that there are no multiplier steps. The extruders and die temperatures are set to 240°C for all the streams and layers of the multilayer products to ensure matching viscosities of the two polymer melts. The multilayer extrudate is extruded from a flat 35.5 cm (14 inch) die having a die gap of 508 μm (20 mils) to a chill roll having a temperature of 80°C. with almost no air gap between the die and chill roll and providing a relatively fast cooling of the film. The overall flow rate is around 1.36 kg/hr (3 lbs/hr). The nominal COP layer thicknesses are calculated from the number of layers, the composition ratio, the skin volume percentage and the overall film thickness. The oxygen and water vapor transmission rates are measured and noted below.

To evaluate the moisture vapor and oxygen barrier performance of the multilayer films described above, theoretical barrier properties are calculated for the layered films using an established model for predicting the properties of multilayer films from the properties of the individual film layers. As is known in the art, the water vapor and oxygen permeabilities of a multilayer film can be calculated or predicted from monolayer control data (see W. J. Schrenk and T. Alfrey, Jr., POLYMER ENGINEERING AND SCIENCE, Nov. 1969, Vol. 9, No. 6; pp. 398 - 399). This series model for layered assemblies gives the gas permeability as

$$P = \left(\frac{\phi_A}{P_A} + \frac{1-\phi_A}{P_B}\right)^{-1} \quad \text{(Equation 1)}$$

where $\phi_A$ is the volume fraction of component A, and $P_A$ and $P_B$ are the permeabilities of component A and component B extruded control films, respectively.

Using the determined EP and COP control film values (e.g., 0.27 for $P_{HDPE1}$ and 0.44 for $P_{COC}$) from the control film tests, Equation 1 gives the predicted or calculated permeabilities of the multilayer films. For example, as shown in Table 3 for film series 1, a HDPE1/COC (67/33) layered assembly would be expected to have a permeability of 0.12 g mm/$m^2$.day (0.31 g mil/100$in^2$.day) and, as shown in Table 4 for film series 6, a PP/COC (67/33) layered assembly would have a permeability of 0.24 g mm/m2.day (0.62 g mil/100$in^2$.day). This model was used to prepare the all "Calculated" water vapor or oxygen transmission rates shown as Controls in the Tables below. As can be seen in Table 3, the calculated values correspond generally to the rates that are observed for a more simple, 5-layer film having the conventional layer numbers and thicknesses.

Testing Methods

Embedded films are microtomed through the thickness at -75°C with a cryo-ultramicrotome (MT6000-XL from RMC) and cross-sections are examined with an atomic force microscope (AFM) to visualize the layers and the morphology inside layers. Phase and height images or the cross-section are recorded simultaneously at ambient temperature in air using the tapping mode of the Nanoscope IIIa MultiMode scanning probe (Digital Instruments). A region from the cross-section of a film with 66 nm (i.e., 25.4 μm (1 mil) film) and 530 nm (i.e., 203 μm (8 mil) film)-thick HDPE1 and COC layers and HDPE1/COC 67/33 composition confirms that the layers are well-defined and continuous. Although there is some non-uniformity, the average layer thickness is observed to be quite close to the nominal layer thickness calculated from the film thickness, the composition ratio and the total number of layers.

Water vapor permeabilities at 38°C, 100% relative humidity and 1 atm pressure are measured with a MOCON Permatran-W 3/31. The instrument is calibrated with National Institute of Standards and Technology certified 25 μm-thick polyester film of known water vapor transport characteristics. The specimens are prepared and the WVTR is performed according to ASTM F1249.

Oxygen permeabilities at 23°C, 0% relative humidity and 1 atm pressure are measured with a MOCON OX-TRAN 2/20. The instrument is calibrated with National Institute of Standards and Technology certified Mylar film of known $O_2$ transport characteristics. The specimens are prepared and the WVTR is performed according to ASTM D3985.

Using the commercial MOCON instruments, the water vapor permeabilities (P) are first measured on extruded control films: HDPE, PP, COC, and CBC. Then, the water vapor permeabilities (P) are measured on HDPE1/COC, HDPE1/CBC1, and HDPE1/CBC2 multilayer films.

Water vapor permeabilities (WVTR) as shown in Tables 3 and 4 and oxygen permeabilities (OTR) as shown in Tables 5 and 6 are measured on the HDPE/COP and PP/COP multilayer films prepared as described above.

Table 3 - Water Vapor Transmission Rates for HDPE-Based Multilayer Films

| Nom. COP Layer Thickness (nm) | Total Skin Layer Vol. % | HDPE1/COC | | HDPE1/CBC1 | | HDPE1/CBC2 | |
|---|---|---|---|---|---|---|---|
| | | Expt'l Film Series No. 1 | WVTR (g mm/m$^2$. day) ((g-mil/100 in$^2$.day)) | Expt'l Film Series No. 2 | WVTR (g mm/m$^2$. day) ((g-mil/100 in$^2$.day)) | Expt'l Film Series No. 3 | WVTR (g mm/m$^2$. day) ((g-mil/100 in$^2$.day)) |
| 33 | 33 | 1A | 0.06 (0.14) | 2A | 0.075 (0.19) | 3A | 0.07 (0.18) |
| 66 | 33 | 1B | 0.08 (0.21) | 2B | 0.118 (0.30) | 3B | 0.091 (0.23) |
| 132 | 33 | 1C | 0.09 (0.22) | 2C | 0.12 (0.31) | 3C | 0.10 (0.25) |
| 265 | 33 | 1D | 0.091 (0.23) | 2D | 0.13 (0.32) | 3D | 0.102 (0.26) |
| 530 | 33 | 1E | 0.091 (0.23) | 2E | 0.13 (0.32) | 3E | 0.102 (0.26) |
| 8382 | 33 | Control Film 4 | 0.13 (0.32) | Control Film 5 | 0.18 (0.46) | | |
| | | Calculated | 0.12 (0.31) | Calculated | 0.14 (0.360 | Calculated | 0.15 (0.37) |

Table 4 - Water Vapor Transmission Rates for Comparative PP-Based Multilayer Films

| Nom. COC/ CBC Layer Thickness (nm) | Total Skin Layer Vol. % | PP/COC | | PP/CBC1 | | PP/CBC2 | |
|---|---|---|---|---|---|---|---|
| | | Expt'l Film Series No. 6 | WVTR (g mm/m$^2$. day) ((g-mil/ 100in$^2$ .day)) | Expt'l Film Series No. 7 | WVTR (g mm/m$^2$. day) ((g-mil/ 100in$^2$ .day)) | Expt'l Film Series No. 8 | WVTR (g mm/m$^2$. day) ((g-mil/ 100in$^2$.d ay)) |
| 33 | 33 | 6A | 0.22 (0.56) | 7A | 0.25 (0.63) | 8A | 0.31 (0.79) |
| 66 | 33 | 6B | 0.24 (0.60) | 7B | 0.29 (0.73) | 8B | 0.33 (0.84) |
| Control | Control | Calculated | 0.244 (0.62) | Calculated | 0.29 (0.73) | Calculated | 0.30 (0.75) |

As shown in Table 3, for HDPE/COC and HDPE/CBC multilayer systems, permeability data in the range of tested layer thickness (33 to 530 nm) were lower than the series model calculation from monolayer control data. The permeabilities of films with 33 nm-thick COC or CBC layers were about 2 times lower than the series model predictions. However, as shown in Table 4, no water vapor permeability improvements over the series model prediction from monolayer control data were observed for the three systems based on PP/COC or PP/CBC.

Table 5 - Oxygen Transmission Rate for HDPE Multilayer Films

| Nom. COC/ CBC Layer Thickness (nm) | Total Skin Layer Vol. % | HDPE1/COC | | HDPE2/COC | | HDPE3/COC | |
|---|---|---|---|---|---|---|---|
| | | | OTR | | OTR | | OTR |
| | | Expt'l Film Series No. 1 | (cc-mm/$m^2$. day.atm) ((cc-mil/100 $in^2$.day. atm)) | Expt'l Film Series No. 9 | (cc-mm/$m^2$. day.atm) ((cc-mil/100$in^2$. day. atm)) | Expt'l Film Series No. 10 | (cc-mm/$m^2$. day.atm) ((cc-mil/100$in^2$. day. atm)) |
| 33 | 33 | 1A | - | 9A | 30.2 (76.7) | 10A | 27.3 (69.4) |
| 66 | 33 | 1B | 34.9 (88.5) | 9 B | 26.9 (68.3) | 10B | 20.7 (52.6) |
| 132 | 33 | 1C | 30.3 (76.8) | 9 C | 23.3 (59.2) | 10C | 17.4 (44.1) |
| | - | Calculated | 34.3 (87.1) | Calculated | 23.2 (58.9) | Calculated | 17.0 (43.1) |

Table 6 - Oxygen Transmission Rate for HDPE Multilayer Films

| Nom. COC/ CBC Layer Thick -ness (nm) | Total Skin Layer Vol. % | HDPE1/CBC1 | | HDPE2/CBC1 | | HDPE3/CB1 | |
|---|---|---|---|---|---|---|---|
| | | | OTR | | OTR | | OTR |
| | | Expt'l Film Series No. 2 | (cc-mm/$m^2$. day.atm) ((cc-nil/ 100$in^2$.day. atm)) | Expt'l Film Series No. 11 | (cc-mm/$m^2$. day.atm) ((cc-mil/100$in^2$. day. atm)) | Expt'l Film Series No. 12 | (cc-mm/$m^2$. day.atm) ((cc-mil/100$in^2$. day. atm)) |
| 33 | 33 | 2A | - | 11A | 39.2 (99.4) | 12A | 31.8 (80.7) |
| 66 | 33 | 2B | 52.6 (133.6) | 11B | 31.3 (79.5) | 12B | 28.1 (71.2) |
| 132 | 33 | 2C | 58.6 (148.6) | 11C | 26.4 (67.1) | 12C | 24.2 (61.5) |
| | | Calculated | 46.4 (117.8) | Calculated | 25.5 (64.8) | Calculated | 18.2 (46.1) |

No oxygen permeability improvements over the series model prediction from monolayer control data were observed for various HDPE/COC and HDPE/CBC samples in Tables 5 and 6 above.

HDPE Density Variation

Three different density HDPEs (HDPE1, HDPE2, and HDPE3 of Table 2) are compared to see the effect of HDPE density on WVTR in HDPE/COC and HDPE/CBC systems. The densities are 0.96, 0.963, and 0.97 g/cc for HDPE1, HDPE2, and HDPE3, respectively. The measured HDPE2/COC and HDPE3/COC water vapor permeabilites at 33 nm-thick COC layer are shown in Table 7.

Table 7 - HDPE Density Variations

| Nom. COC/CBC Layer Thickness (nm) | HDPE1/COC | | HDPE2/COC | | HDPE3/COC | |
|---|---|---|---|---|---|---|
| | | WVTR | | WVTR | | WVTR |
| | Expt'l Film No | (g mm/$m^2$. day) ((g-mil/100$in^2$. Day)) | Expt'l Film No | (g mm/$m^2$. day) ((g-mil/100$in^2$. day)) | Expt'l Film No | (g mm/$m^2$. day) ((g-mil/100$in^2$. day)) |
| 33 | 1A | 0.055 (0.14) | 9A | 0.059 (0.15) | 10A | 0.051 (0.13) |

Table 8 - HDPE Density Variations

| Nom. COC/CBC Layer Thickness (nm) | HDPE1/CBC1 | | HDPE2/CBC1 | | HDPE3/CBC1 | |
|---|---|---|---|---|---|---|
| | | WVTR | | WVTR | | WVTR |
| | Expt'l Film No | (g mm/m$^2$. day) ((g-mil/100in$^2$.day)) | Expt'l Film No | (g mm/m$^2$. day) ((g-mil/100in$^2$.day)) | Expt'l Film No | (g mm/m$^2$. day) ((g-mil/100in$^2$.day)) |
| 33 | 2A | 0.075 (0.19) | 11A | 0.047 (0.12) | 12A | 0.039 (0.10) |

Although control HDPE data demonstrate that higher density HDPEs generally exhibit a reduced WVTR (Table 2), for HDPE/COC layers, no significant water vapor permeability improvement is observed with higher density HDPE in the film samples, though nominal WVTR improvement is observed. However, the water vapor permeabilities of HDPE2/CBC1 and HDPE3/CBC1 at 33 nm-thick CBC1 layer showed WVTR improvement, from 0.075 (0.19) for HDPE1 to 0.047 (0.12) and 0.039 g mm/m$^2$. day (0.10 g mil/100in$^2$.day) for HDPE2/CBC1 and HDPE3/CBC1 samples, respectively. These permeabilities are approximately 1.5X improvements from the series model predictions. In every instance, the HDPE/COC microlayer film and the HDPE/CBC microlayer film have improved WVTR compared to control films made with equal volumes of the same HDPE.

Experimental Films 1A, and 2A, coextruded HDPE/COC and HDPE/CBC1 film samples with 33 nm-thick COC/CBC1 layers, are re-heated to 145°C for 2 minutes and then cooled slowly in air. The percent crystallinities in films before (i.e., fast quenched on the chill roll) and after (i.e., reheated & slowly cooled) the post extrusion thermal treatment are measured by using a differential scanning calorimetry (DSC) and reported in Table 9. The differential scanning calorimetry (DSC) is conducted with a Perkin-Elmer DSC-7 at a heating rate 10°C/min. The crystallinity is calculated using the heat of fusion ($\Delta H^0$ value of 293 J/g for HDPE, Wunderlich B. Macromolecular Physics. Vol. 3. New York, Academic Press, 1980, p. 58).

Table 9

| Experimental Film No. | | Fast Quenched | Reheated & Slowly Cooled |
|---|---|---|---|
| | | % Crystallinity | |
| 1A | HDPE1/COC | 60 | 69 |
| 9A | HDPE2/COC | 62 | 70 |
| 10A | HDPE3/COC | 62 | 70 |
| 2A | HDPE1/CBC1 | 61 | 69 |
| 11A | HDPE2/CBC1 | 62 | 69 |
| 12A | HDPE3/CBC1 | 62 | 70 |

As shown above in Table 9 and below in Table 10, the extra thermal treatment increased the percent crystallinity by 7 to 9% for various HDPE/COC and HDPE/CBC1 samples and also decreased water vapor permeabilites by 13 to 20% for these systems. Post extrusion thermal treatment led to 0.032 g mm/m$^2$. day (0.08 g mil/100in2.day) for HDPE3/CBC1 sample. This permeability is approximately 2X improvements from the series model prediction.

Table 10

| Experimental Film No. | | Fast Quenched | Reheated & Slowly Cooled |
|---|---|---|---|
| | | WVTR (g mm/m$^2$. day) ((g-mil/100in$^2$.day)) | WVTR (g mm/m$^2$. day) ((g-mil/100in$^2$.day)) |
| 1A | HDPE1/COC | 0.055 (0.14) | 0.047 (0.12) |
| 9A | HDPE2/COC | 0.059 (0.15) | 0.051 (0.13) |
| 10A | HDPE3/COC | 0.051 (0.13) | 0.039 (0.10) |
| 2A | HDPE1/CBC1 | 0.075 (0.19) | 0.063 (0.16) |
| 11A | HDPE2/CBC1 | 0.047 (0.12) | 0.039 (0.10) |

(continued)

| Experimental Film No. | | Fast Quenched | Reheated & Slowly Cooled |
|---|---|---|---|
| | | WVTR (g mm/$m^2$. day) ((g-mil/100$in^2$.day)) | WVTR (g mm/$m^2$. day) ((g-mil/100$in^2$.day)) |
| 12A | HDPE3/CBC1 | 0.039 (0.10) | 0.032 (0.08) |

## Claims

**1.** A coextruded multilayer film or sheet comprising at least four alternating layers of layer materials A and B, the layers of A and B each having an average layer thickness of from 1 to 3000 nm, wherein;

a. layer material A is from 5 to 95 volume percent of the film or sheet based on layer materials A and B and comprises a cyclic olefin polymer ("COP") wherein the cyclic olefin polymer is selected from the group consisting of:

A. cyclic olefin block copolymers ("CBCs") prepared by producing block copolymers of butadiene and styrene that are hydrogenated to a CBC;
B. COPs based on a ring opening metathesis route via norbornene or substituted norbornene;
C. amorphous, transparent copolymers based on cyclic olefins and linear olefins;
D. blends of two or more COPs; or
E. blends of one or more COP with polymers that are not COPs comprising at least 25 wt% cyclic olefin unit content in the total blend or composition;

b. layer material B is from 5 to 95 volume percent of the film or sheet based on layer materials A and B and comprises an ethylene polymer wherein the ethylene polymer has a density of greater than 0.91 grams per cubic centimeter and is selected from the group consisting of high density polyethylene and medium density polyethylene.

**2.** The coextruded multilayer film or sheet of Claim 1 where the layers of A and B have a total thickness of at least 40 nm.

**3.** The coextruded multilayer film or sheet of Claim 1 comprising outer skin layers C and optional inner layers D which comprise from 5 to 90 volume percent of the film or sheet.

**4.** The coextruded multilayer film or sheet of any of Claims 1 through 3 having a thickness of from 4.5 $\mu$m to 7.5 mm.

**5.** The coextruded multilayer film or sheet of Claim 1 comprising from 10 to 1000 alternating layers of A and B.

**6.** The multilayer film or sheet of Claim 1 wherein the A and B layers have an average thickness of from 10 to 500 nm.

**7.** The multilayer film or sheet of any of the Claims above made in the form of or formed into a profile, tube or parison.

**8.** A profile, tube or parison comprising at least four alternating layers of layer materials A and B, the layers of A and B having an average layer thickness of from 1 to 3000 nm, wherein;

a. layer material A is from 5 to 95 volume percent of the layer materials A and B and comprises a cyclic olefin polymer wherein the cyclic olefin polymer is selected from the group consisting of:

A. cyclic olefin block copolymers ("CBCs") prepared by producing block copolymers of butadiene and styrene that are hydrogenated to a CBC;
B. COPs based on a ring opening metathesis route via norbornene or substituted norbornene;
C. amorphous, transparent copolymers based on cyclic olefins and linear olefins;
D. blends of two or more COPs; or
E. blends of one or more COP with polymers that are not COPs comprising at least 25 wt% cyclic olefin unit content in the total blend or composition;

b. layer material B is from 5 to 95 volume percent of the layer materials A and B and comprises an ethylene polymer wherein the ethylene polymer has a density of greater than 0.91 grams per cubic centimeter and is selected from the group consisting of high density polyethylene and medium density polyethylene.

**9.** A blow molded bottle or other container prepared from a parison of Claim 8.

## Patentansprüche

**1.** Eine koextrudierte mehrschichtige Feinfolie oder Folie, beinhaltend mindestens vier abwechselnde Schichten aus Schichtmaterialien A und B, wobei die Schichten aus A und B jeweils eine durchschnittliche Schichtdicke von 1 bis 3000 nm aufweisen, wobei:

a. Schichtmaterial A bezogen auf die Schichtmaterialien A und B 5 bis 95 Volumenprozent der Feinfolie oder Folie ausmacht und ein Cycloolefin-Polymer ("COP") beinhaltet, wobei das Cycloolefin-Polymer aus der Gruppe ausgewählt ist, die aus Folgendem besteht:

A. Cycloolefin-Blockcopolymeren ("CBCs"), hergestellt durch das Produzieren von Blockcopolymeren von Butadien und Styrol, die zu einem CBC hydriert werden;
B. COPs auf der Basis einer Ringöffnungsmetatheseroute über Norbornen oder substituiertes Norbornen;
C. amorphen, transparenten Copolymeren auf der Basis von Cycloolefinen und linearen Olefinen;
D. Mischungen von zwei oder mehr COPs; oder
E. Mischungen von einem oder mehr COPs mit Polymeren, die nicht COPs sind, beinhaltend einen Cycloolefineinheitengehalt in der gesamten Mischung oder Zusammensetzung von mindestens 25 Gew.-%;

b. Schichtmaterial B bezogen auf die Schichtmaterialien A und B 5 bis 95 Volumenprozent der Feinfolie oder Folie ausmacht und ein Ethylenpolymer beinhaltet, wobei das Ethylenpolymer eine Dichte von mehr als 0,91 Gramm pro Kubikzentimeter aufweist und aus der Gruppe ausgewählt ist, die aus Polyethylen hoher Dichte und Polyethylen mittlerer Dichte besteht.

**2.** Koextrudierte mehrschichtige Feinfolie oder Folie gemäß Anspruch 1, wobei die Schichten aus A und B eine Gesamtdicke von mindestens 40 nm aufweisen.

**3.** Koextrudierte mehrschichtige Feinfolie oder Folie gemäß Anspruch 1, beinhaltend äußere Randschichten C und optional innere Schichten D, die 5 bis 90 Volumenprozent der Feinfolie oder Folie ausmachen.

**4.** Koextrudierte mehrschichtige Feinfolie oder Folie gemäß einem der Ansprüche 1 bis 3, die eine Dicke von 4,5 $\mu$m bis 7,5 mm aufweist.

**5.** Koextrudierte mehrschichtige Feinfolie oder Folie gemäß Anspruch 1, beinhaltend 10 bis 1000 abwechselnde Schichten aus A und B.

**6.** Mehrschichtige Feinfolie oder Folie gemäß Anspruch 1, wobei die Schichten A und B eine durchschnittliche Dicke von 10 bis 500 nm aufweisen.

**7.** Mehrschichtige Feinfolie oder Folie gemäß einem der obigen Ansprüche, die in der Form eines Profils, einer Röhre oder eines Vorformlings gefertigt ist oder zu einem/einer solchen gebildet ist.

**8.** Ein Profil, eine Röhre oder ein Vorformling, beinhaltend mindestens vier abwechselnde Schichten aus Schichtmaterialien A und B, wobei die Schichten aus A und B eine durchschnittliche Schichtdicke von 1 bis 3000 nm aufweisen, wobei:

a. Schichtmaterial A 5 bis 95 Volumenprozent der Schichtmaterialien A und B ausmacht und ein Cycloolefin-Polymer beinhaltet, wobei das Cycloolefin-Polymer aus der Gruppe ausgewählt ist, die aus Folgendem besteht:

A. Cycloolefin-Blockcopolymeren ("CBCs"), hergestellt durch das Produzieren von Blockcopolymeren von Butadien und Styrol, die zu einem CBC hydriert werden;
B. COPs auf der Basis einer Ringöffnungsmetatheseroute über Norbornen oder substituiertes Norbornen;

C. amorphen, transparenten Copolymeren auf der Basis von Cycloolefinen und linearen Olefinen;
D. Mischungen von zwei oder mehr COPs; oder
E. Mischungen von einem oder mehr COPs mit Polymeren, die nicht COPs sind, beinhaltend einen Cycloolefineinheitengehalt in der gesamten Mischung oder Zusammensetzung von mindestens 25 Gew.-%;

b. Schichtmaterial B 5 bis 95 Volumenprozent der Schichtmaterialien A und B ausmacht und ein Ethylenpolymer beinhaltet, wobei das Ethylenpolymer eine Dichte von mehr als 0,91 Gramm pro Kubikzentimeter aufweist und aus der Gruppe ausgewählt ist, die aus Polyethylen hoher Dichte und Polyethylen mittlerer Dichte besteht.

**9.** Eine blasgeformte Flasche oder ein anderer blasgeformter Behälter, hergestellt aus einem Vorformling gemäß Anspruch 8.

## Revendications

**1.** Un film ou une feuille multicouche coextrudé(e) comprenant au moins quatre couches alternées de matériaux de couche A et B, les couches de A et B ayant chacune une épaisseur de couche moyenne allant de 1 à 3 000 nm, où :

a. le matériau de couche A fait de 5 à 95 pour cent en volume du film ou de la feuille rapporté aux matériaux de couche A et B et comprend un polymère oléfinique cyclique (« COP »), le polymère oléfinique cyclique étant sélectionné dans le groupe constitué :

A. de copolymères blocs oléfiniques cycliques (« CBC ») préparés par production de copolymères blocs de butadiène et styrène qui sont hydrogénés en un CBC ;
B. de COP basés sur un mécanisme de métathèse par ouverture de cycle via du norbornène ou du norbornène substitué ;
C. de copolymères amorphes, transparents basés sur des oléfines cycliques et des oléfines linéaires ;
D. de mélanges homogènes de deux COP ou plus ; ou
E. de mélanges homogènes d'un COP ou plus avec des polymères qui ne sont pas des COP comprenant une teneur en unités oléfiniques cycliques d'au moins 25 % en poids dans le mélange homogène ou la composition total(e) ;

b. le matériau de couche B fait de 5 à 95 pour cent en volume du film ou de la feuille rapporté aux matériaux de couche A et B et comprend un polymère d'éthylène, le polymère d'éthylène ayant une masse volumique supérieure à 0,91 gramme par centimètre cube et étant sélectionné dans le groupe constitué de polyéthylène haute densité et de polyéthylène moyenne densité.

**2.** Le film ou la feuille multicouche coextrudé(e) de la revendication 1 où les couches de A et B ont une épaisseur totale d'au moins 40 nm.

**3.** Le film ou la feuille multicouche coextrudé(e) de la revendication 1 comprenant des couches de peau externes C et des couches internes facultatives D qui composent de 5 à 90 pour cent en volume du film ou de la feuille.

**4.** Le film ou la feuille multicouche coextrudé(e) de n'importe lesquelles des revendications 1 à 3 ayant une épaisseur allant de 4,5 $\mu$m à 7,5 mm.

**5.** Le film ou la feuille multicouche coextrudé(e) de la revendication 1 comprenant de 10 à 1 000 couches alternées de A et B.

**6.** Le film ou la feuille multicouche de la revendication 1 où les couches A et B ont une épaisseur moyenne allant de 10 à 500 nm.

**7.** Le film ou la feuille multicouche de n'importe lesquelles des revendications ci-dessus réalisé(e) sous la forme de ou façonné(e) en un profil, un tube ou une paraison.

**8.** Un profil, un tube ou une paraison comprenant au moins quatre couches alternées de matériaux de couche A et B, les couches de A et B ayant une épaisseur de couche moyenne allant de 1 à 3 000 nm, où :

a. le matériau de couche A fait de 5 à 95 pour cent en volume des matériaux de couche A et B et comprend un polymère oléfinique cyclique, le polymère oléfinique cyclique étant sélectionné dans le groupe constitué :

A. de copolymères blocs oléfiniques cycliques (« CBC ») préparés par production de copolymères blocs de butadiène et styrène qui sont hydrogénés en un CBC ;
B. de COP basés sur un mécanisme de métathèse par ouverture de cycle via du norbornène ou du norbornène substitué ;
C. de copolymères amorphes, transparents basés sur des oléfines cycliques et des oléfines linéaires ;
D. de mélanges homogènes de deux COP ou plus ; ou
E. de mélanges homogènes d'un COP ou plus avec des polymères qui ne sont pas des COP comprenant une teneur en unités oléfiniques cycliques d'au moins 25 % en poids dans le mélange homogène ou la composition total(e) ;

b. le matériau de couche B fait de 5 à 95 pour cent en volume des matériaux de couche A et B et comprend un polymère d'éthylène, le polymère d'éthylène ayant une masse volumique supérieure à 0,91 gramme par centimètre cube et étant sélectionné dans le groupe constitué de polyéthylène haute densité et de polyéthylène moyenne densité.

**9.** Une bouteille ou un autre contenant moulé(e) par soufflage préparé(e) à partir d'une paraison de la revendication 8.

FIGURE 1

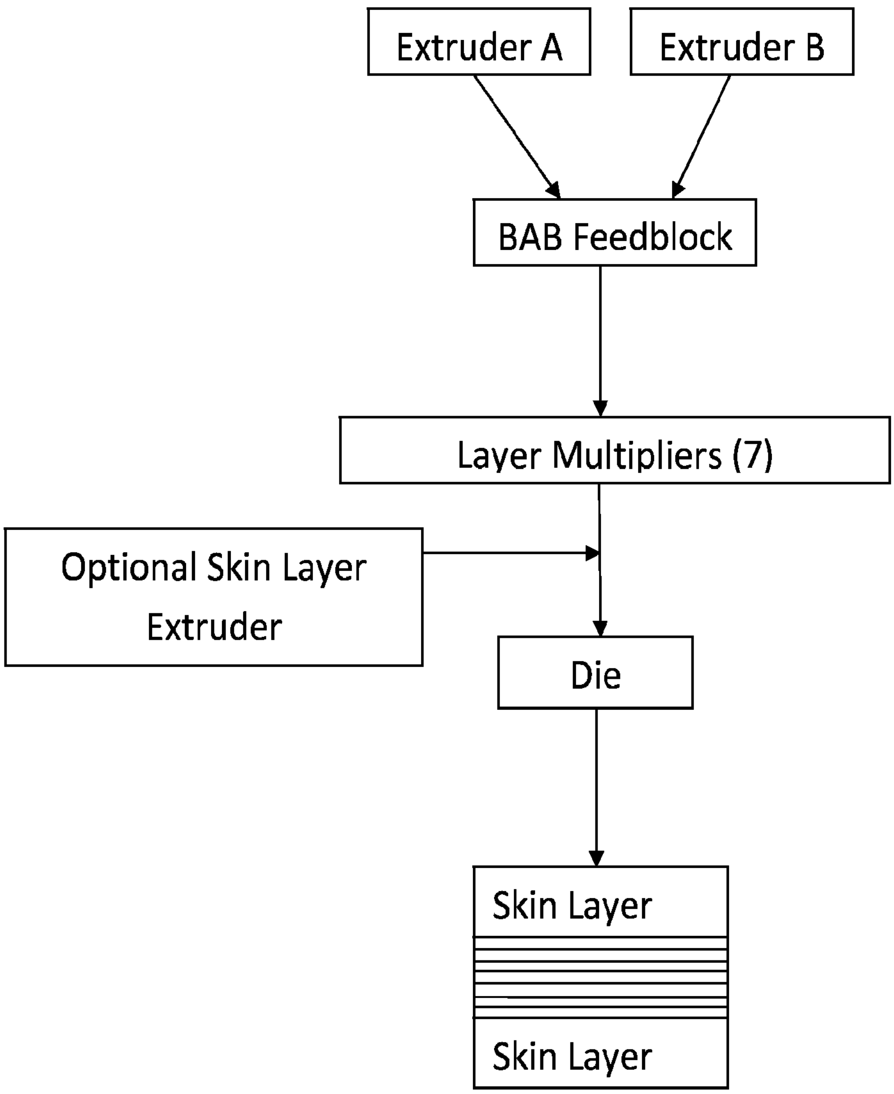
Extruder A
Extruder B
BAB Feedblock
Layer Multipliers (7)
Optional Skin Layer Extruder
Die
Skin Layer
Skin Layer

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20090169853 A
- US 20070084083 A
- WO 2000076765 A
- US 20100143709 A
- US 20110241245 A
- US 5783638 A
- WO 2000056783 A1
- WO 2008008875 A
- US 3565985 A
- US 3557265 A
- US 3884606 A
- US 4842791 A
- US 6685872 B
- WO 2010096608 A2
- US 5094793 A


### Non-patent literature cited in the description


- **WANG, H. ; KEUM, J.K. ; HILTNER, A. BAER, E. ; FREEMAN, B. ; ROZANSKI, A. ; GALESKI, A.** Confined Crystallization of Polyethylene Oxide in Nanolayer Assemblies. *Science,* 2009, vol. 323, 757
- **YAMAZAKI.** *Journal of Molecular Catalysis A: Chemical,* 2004, vol. 213, 81-87
- **SHIN et al.** *Pure Appl. Chem.,* 2005, vol. 77 (5), 801-814
- **W. J. SCHRENK ; T. ALFREY, JR.** *POLYMER ENGINEERING AND SCIENCE,* November 1969, vol. 9 (6), 398-399
- **WUNDERLICH B.** Macromolecular Physics. Academic Press, 1980, vol. 3, 58